## Europäisches Patentamt

**European Patent Office**

**Office européen des brevets**

(11) Publication number: **0 121 516**
**B1**

(12) # EUROPEAN PATENT SPECIFICATION

(45) Date of publication of patent specification: **06.05.87**

(51) Int. Cl.⁴: **B 22 F 3/00, C 04 B 35/64**

(21) Application number: **82903509.6**

(22) Date of filing: **30.09.82**

(86) International application number:
**PCT/US82/01371**

(87) International publication number:
**WO 84/01316 12.04.84 Gazette 84/10**

(54) METHOD OF FORMING DENSE CERAMIC BODIES.

(43) Date of publication of application:
**17.10.84 Bulletin 84/42**

(45) Publication of the grant of the patent:
**06.05.87 Bulletin 87/19**

(84) Designated Contracting States:
**DE GB SE**

(56) References cited:
DE-A-2 163 889
GB-A-1 340 696
GB-A-1 364 451
GB-A-1 405 171
US-A-3 324 212
US-A-3 469 976
US-A-3 627 861
US-A-3 632 708
US-A-4 023 966
US-A-4 260 047

(73) Proprietor: **Ford Motor Company**
**The American Road**
**Dearborn, MI 48121 (US)**
(84) **SE**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(72) Inventor: **EZIS, Andre**
**23235 West River Road**
**Grosse Ile, MI 48138 (US)**
Inventor: **COPPLE, Warren, B.**
**5742 Whitefield**
**Dearborn Heights, MI 48127 (US)**

(74) Representative: **Messulam, Alec Moses et al**
**A. Messulam & Co. 24 Broadway**
**Leigh on Sea Essex SS9 1BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Description

Recently, modified silicon nitride ceramics have been found useful as cutting tools. For such use, the ceramic can be prepared by hot pressing to full density either (a) a loose powder mixture of silicon nitride and powder additives (see U.S. patents 4,264,548; 4,264,550 and 4,323,325), or (b) a semidense billet of a previously heat treated powder preform having crystallized secondary phases.

Because hot pressing takes place under an unusually reactive environment, along with high pressure $1.38 \times 10^4 - 4.48 \times 10^4$ kPa (2000—6500 psi) and temperature (1500—1800°C), it has been necessary to arrange the pressing die to press only a unitary body of the ceramic in a simple geometrical form such as a cylinder or disc. The resulting disc or cylinder must then be cut or sawed with expensive diamond materials to produce a production type cutting tool of appropriate geometry capable of being used in milling and other industrial machine cutting operations.

Producing accurate tool surfaces in their substantially usable condition, as a direct result of hot pressing, has long been a goal of the prior art. However, due to volume changes, and chemical reactions during hot pressing, the goal has not been attained. Considerable removal of material is shaved or ground off the hot pressed product to define the cutting tool insert accurately.

Thus individualized pressing of one body has been normal commercial mode of producing silicon nitride ceramics which can be formed into a cutting tool. The prior art has considered the goal of making a plurality of cutting tool bodies, each having a desired rough final configuration as a result of hot pressing, within a single hot pressing sequence. This would be most desirable because the unit cost of each tool would be substantially reduced and much of the diamond cutting or shaping would be eliminated. One attempt by the prior art to achieve such simultaneous pressing of multiple independent bodies is represented in British patent 1,405,171, wherein a plurality of independent triangular modules of silicon nitride material, along with triangular shaped packing bodies deployed along the periphery of the pressing chamber, were nested within a hot pressing cavity and hot pressed under a single stroke or sequence. The number of bodies in the pressing sequence were laid in a common layer limited to two bodies in such layer. In an alternative suggestion, two layers were employed with two bodies in each layer. Since each body was free to move relative to the other when placed in the hot pressing cavity, and since there was not isostatic pressure transfer medium between the bodies, it was difficult to provide for uniform transfer pressure between the bodies while under the pressing sequence. Thus nonuniform densities resulted within the ultimate pressed bodies.

According to the present invention there is provided a method of simultaneously and uniformly densifying a plurality of semidense ceramic bodies by hot pressing characterised in that said method includes providing a cluster of said bodies which are interconnected together with a uniform space therebetween, filling the spaces between said bodies within said cluster with an isostatic pressure medium, hot pressing one or more of said clusters, arranged in contiguous stacked relation, with sufficient pressure and temperature to density each of said bodies at least 96% of full theoretical density, and separating said bodies by breaking connections between said bodies thereby leaving each body in a substantially usable condition as a cutting tool.

It is desirable that the ceramic bodies are interconnected together along a common plane to form a planar cluster of bodies; the clusters may then be stacked during hot pressing. Preferably the cluster of the ceramic bodies is provided by forming a semidense disc of silicon nitride based material, deeply grooving the disc in a pattern along one face to define said bodies and to leave only enough ungrooved material between said bodies to form connection therebetween. More particularly, the grooving may be carried out to a generally uniform depth whereby the ungrooved material defines a thin membrane along the opposite face of the disc. The semidense disc may be formed by agglomerating or cold compacting powder materials of at least one of either a mixture of silicon powder with fluxes or other additives which is then subjected to a nitriding treatment, or a mixture of silicon nitride powder along with fluxing or other additives. The grooving may also be carried out on thermally strengthened, cold compacted silicon powder prior to nitriding. In any case, the powder mixture is cold pressed into a preform preferably shaped as a round disc having a thickness of about 0.76—2.03 cm (0.3—0.8 inches) and a diameter of 7.62—30.48 cm (3—12 inches). Optimally, the grooves are patterned in a grid and penetrate to a depth of about 90—95% of the disc. The discs to be grooved may preferably have a density of 85% or less, and the hot pressed bodies preferably have a density of greater than 96% of theoretical (3.1 g/cm³ or greater).

The connections are ruptured by a diamond grinding operation which not only removes the hinge itself, but also a small portion of each body (the connection and small portions together constituting a membrane). If the bodies are connected at a mid-location of their sides, rather than at the bottom, diamond grinding of the bottom membrane is not needed and rupture is by manual fracture.

Advantageously, the isostatic pressing medium is selected from the group consisting of boron nitride, flake graphite, borosilicate glass, or other powdered metals or glass that provide appropriate viscosity and inertness at the temperature of the hot pressing operation. The clusters may be preferably stacked in contiguous order in numbers of 10 or more in the pressing cavity.

The above method is advantageous because it (a) reduces the cost of the current method of fabricating ceramic cutting tools, (b) eliminates ceramic material transport during the hot pressing step (the transport causing dishing), and (c) provides a quicker and more accurate way of setting up the hot pressing assembly.

Summary of the Drawings

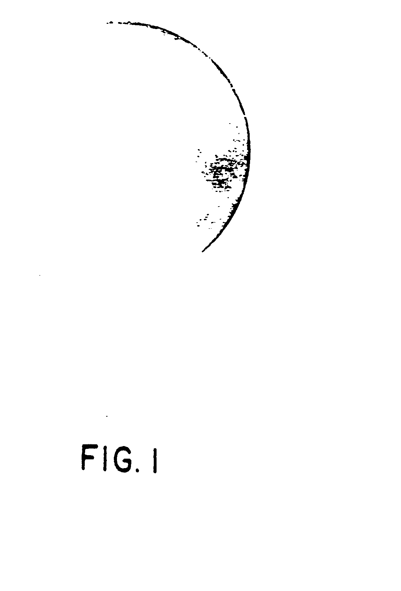

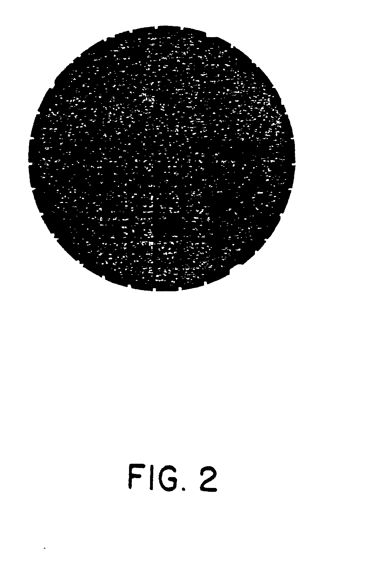

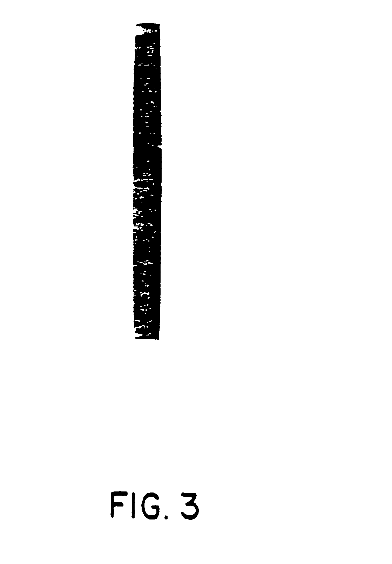

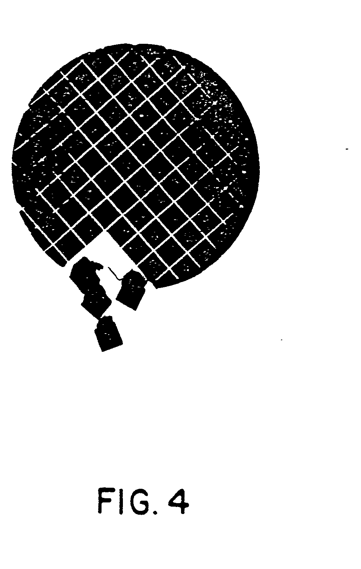

Figures 1—4 are photographs respectively of (1) a plan view of a nitrided preformed disc of silicon nitride, (2) a plan view of the nitrided preformed disc after it has been subjected to grooving to define a cluster of bodies, (3) an elevational view of the grooved disc, and (4) a plan view of the hot pressed cluster showing some bodies freed from the cluster by fracturing the interconnecting hinge and thereby defining a usable cutting tool.

Detailed Description

Individualized molding of one body has been the normal mode of fabricating ceramic cutting tools. This invention provides for multiple and simultaneous molding of several ceramic bodies and densification of such bodies within a single hot pressing stroke. The advantages of such a method include: (a) quick and accurate hot pressing setup by the handling of harnessed individual bodies of ceramic material which can be quickly put into place even though comprised of a plurality and complex pattern of bodies, (b) the elimination of material transport during the hot pressing process to eliminate dishing of the ceramic bodies which are to be used as cutting tools, and (c) the dramatic reduction of the expense of cutting and shaping the cutting tool bodies after the hot pressing step. The reduction in expense is a direct result of attempting to diamond cut and shape the fully densified hot pressed bodies which is the traditional technique of the prior art.

A preferred method in accordance with this invention is as follows.

A plurality of powder preforms are integrally connected to form one or more clusters of the preforms, the preforms having predetermined uniform space therebetween and having a periphery conforming to a cross section of the pressing cavity.

Preliminary to this step, a mixture of powdered silicon and reactive oxygen carrying powder agents is prepared and milled. Reactive oxygen carrying agents is defined herein to mean powder ingredients that are effective to form protective silicates and/or second phase crystallites, particularly oxynitrides when reacted with silicon under a heated nitrogen atmosphere. The powder agents can be advantageously selected from the group consisting of $Y_2O_3$, $Al_2O_3$, $SiO_2$, MgO, $CeO_2$, $ZrO_2$, $HfO_2$, and rare earths. Use of these agents will improve physical characteristics in formation of a second phase crystallite which will be uniformly dispersed and substantially displace the detrimental glassy silicate phase normally formed, except for a controlled and highly limited amount of the glass.

A measured quantity of the milled mixture is loaded into a cold pressing die arrangement and pressed at ambient conditions using a pressure of $9.65 \times 10^3$—$10.34 \times 10^3$ kPa (1400—1500 psi). The pressed body (hereafter called a billet) is in the form of a circular disc having a diameter of about 15.24 cms (6 inches) and a thickness of about 1.52 cms (0.6 inches). The density of the silicon metal billet at this stage is about 1.4 grams per cubic centimeter, which is approximately 60% of full theoretical for silicon. The density preferably must be less than 73% (1.7 gm/cm³ or less). It may be desirable to argon sinter the billet at 1093°C (2000°F) for two hours prior to nitriding to give the disc sufficient strength so that it can be grooved prior to nitriding, as one option. However, if the grooving is to take place after nitriding, the following procedure is followed.

The compact is heated in a nitriding atmosphere, without the use of pressure normally associated with hot pressing, to produce a silicon nitride comprising body or billet consisting $Si_3N_4$, at least one dispersed second phase crystallite (silicon oxynitride), 0.2—1% silicate (by weight of the body), and up to 0.5% by weight of free silicon and $Y_2O_3$. The body will have a size greater than and a density less than the object to be formed from hot pressing.

Either prior to the nitriding of said disc preform or subsequent to said nitriding, grooves are cut into one face or surface of said preform, preferably in a grid pattern, each groove penetrating to a generally uniform depth of preferably 90—95% of the thickness of the disc, thereby leaving a membrane of ungrooved ceramic material along the opposite side of said disc which membrane forms connections between adjacent ungrooved preformed bodies. The grooves are typically 0.9 mm (0.035 inches) in width and can be generated by the use of a diamond grinding wheel or by equivalent means such as ultrasonics, or they may be imprinted as part of a molding or casting operation to define the preform (i.e., slip casting using wax grid).

The formation of grooved billets or discs can be repeated to form a plurality of such discs, each having identical grid patterns. Alternatively, the preform may be formed of silicon nitride powder admixed with said fluxes and other binder additives; the grooving can be applied to such preform before hot pressing.

Filling With Isostatic Pressure Medium

The spaces defined by said grooves in the grooved billets or discs are filled with an isostatic pressure medium. The isostatic pressure medium may be selected from the group comprising boron nitride powders, flaked graphite, borosilicate glass, or other metals and glasses that provide sufficient viscosity and inertness at the temperature of hot pressing to be experienced. The isostatic pressure medium is typically formed into a slip by the addition of alcohol. The slip is then cast and set up with scraping of excess material across the top of the billet or disc. Alternately, a portion of the excess material can be retained and used as a parting agent to prevent fusion between plates during hot pressing. The density of the formed isostatic media must be such that it will contract simultaneously with the grooved discs during hot pressing; that is, the isostatic media must not prevent the densification of the subject discs.

Stacking

Each of the discs is then stacked along the line of pressing and all identically positioned with the grooves interfacing within said pressing cavity. To accomplish such interfacing, the discs must alternately face up, the next one down, etc. There is a parting agent between interfacing discs. The parting agent is a thin layer (0.25 cm or less) of the isostatic media employed in the grooves and is used to prevent fusion during hot pressing. Other parting agents can be graphite foil or Mo foil.

The hot pressing assembly typically comprises a cylinder with one or more movable end plungers effective to apply sufficient pressure during the hot pressing sequence. The assembly receives its heat from a furnace into which the assembly is placed for the prescribed period of time. A pressing fixture having graphite walls is used to carry out hot pressing. The walls and nitrided bodies are both coated with a slurry of boron nitride and dried. The pressing fixture with nitrided bodies therein placed in the hot pressing furnace. The stacking sequence of the bodies need not be of any special order and need not have rigid separating barriers, such as graphite spacers, between the serrated grooved discs. More than 10 discs may be employed successfully since there is spacing between the grooved bodies which does not allow for material transport.

**Claims**

1. A method of simultaneously and uniformly densifying a plurality of semidense ceramic bodies by hot pressing, characterised in that said method includes providing a cluster of said bodies which are interconnected together with a uniform space therebetween, filling the spaces between said bodies within said cluster with an isostatic pressure medium, hot pressing one or more of said clusters, arranged in contiguous stacked relation, with sufficient pressure and temperature to density each of said bodies at least 96% of full theoretical density, and separating said bodies by breaking connections between said bodies thereby leaving each body in a substantially usable condition as a cutting tool.

2. A method as claimed in Claim 1, in which said bodies are interconnected together along a common plane to form a planar cluster of said bodies.

3. A method as claimed in Claim 1, including agglomerating powdered material to a semidense disc of silicon nitride based material and deeply grooving said disc in a pattern along one face to define said bodies and leaving only enough ungrooved material between said bodies for the connections of said bodies.

4. A method as claimed in Claim 3, in which substantially all said grooving is carried out to a generally uniform depth whereby the ungrooved material defines a thin membrane along the opposite face of said disc.

5. A method as claimed in Claim 3, in which said grooving is carried out along a grid pattern to define bodies of substantially identical configuration.

6. A method as claimed in Claim 3, in which said disc is formed to have a density of 2.7 $g/cm^3$ or less and said hot pressing is carried out to provide a density of at least 3.1 $g/cm^3$.

7. A method as claimed in any one of the preceding claims, in which said isostatic pressing medium is selected from the group consisting of boron nitride, flake graphite, borosilicate glass, and powdered metals or glass that provide sufficient viscosity and inertness at the temperature of the hot pressing step.

8. A method as claimed in Claim 4, in which said bodies are separated by uniformly grinding off said membrane.

9. A method as claimed in Claim 1, including forming, into a disc, materials of at least one of either a mixture of silicon powder and other fluxing or other additives which is then subjected to a nitriding treatment, or a mixture of silicon nitride powder along with fluxing or other additives, and cutting a pattern of grooves in said disc with each groove penetrating to a generally uniform depth to leave a membrane of ungrooved material along the opposite side of said disc.

10. A method as claimed in Claim 9, in which the grooves are formed in a grid pattern, each groove penetrating to a depth of 90—95% of the thickness of said disc.

11. A method as claimed in Claim 9 or 10, in which said bodies are separated by diamond grinding the membrane.

12. A method as claimed in Claim 1, in which in the cluster of said bodies, the adjacent bodies are connected together at a mid location of their adjacent sides and said bodies are separated by manually breakening the connections between said bodies.

13. A method as claimed in Claim 9, in which said disc is round, having a thickness of 0.76—2.03 cm (0.3—0.8 inches) and a diameter of 7.62—30.48 cm (3—12 inches).

14. A method as claimed in any one of the preceding claims, in which ten or more of the clusters are placed in contiguous stacked order within a cavity for hot pressing the clusters.

**Patentansprüche**

1. Verfahren zur gleichzeitigen und gleichförmigen Verdichtung einer Mehrzahl halbdichter Keramikkörper durch Heisspressen, dadurch gekennzeichnet, dass man diese Körper in Gruppen miteinander verbunden mit gleichförmigen Zwischenräumen zwischen ihnen anordnet, die Zwischenräume zwischen diesen Körpern innerhalb der Gruppe mit einem isostatischen Druckmedium füllt, eine oder mehrere solche in gegenseitiger Berührung gestapelte Gruppen bei genügendem Druck und genügender Temperatur heisspresst, um diese Körper jeweils auf mindestens 96% der vollen theoretischen Dichte zu verdichten, und diese Körper durch Aufbrechen der Verbindungen zwischen ihnen trennt, so dass jeder Körper im wesentlichen in als Schneidwerkzeug verwendbarem Zustand verbleibt.

2. Verfahren nach Anspruch 1, worin diese Körper entlang einer gemeinsamen Ebene unter Bildung einer ebenen Gruppe solcher Körper miteinander verbunden sind.

3. Verfahren nach Anspruch 1, wobei man gepulvertes Material zu einer halbdichten Scheibe aus Material auf Siliciumnitridgrundlage agglomeriert und in dieser Scheibe in einem Muster entlang einer Fläche tiefe Rillen zur Begrenzung dieser Körper anbringt, so dass zwischen diesen Körpern nur zu deren Verbindung genügend ungerilltes Material verbleibt.

4. Verfahren nach Anspruch 3, worin im wesentlichen sämtliche Rillen in allgemein gleichförmiger Tiefe angebracht werden, so dass das ungerillte Material eine dünne Membran entlang der entgegengesetzten Fläche dieser Scheibe darstellt.

5. Verfahren nach Anspruch 3, worin diese Rillen entsprechend einem Gittermuster angebracht werden, um Körper im wesentlichen identischer Konfiguration zu bilden.

6. Verfahren nach Anspruch 3, worin diese Scheibe mit einer Dichte von 2,7 g/cm³ oder weniger gebildet und die Heisspressung so durchgeführt wird, dass sich eine Dichte von mindestens 3,1 g/cm³ ergibt.

7. Verfahren nach einem der vorhergehenden Ansprüche, worin man besagtes isostatisches Druckmedium aus der Bornitrid, Graphitschuppen, Borosilicatglass, Pulvermetalle oder Glas umfassenden Gruppe auswählt, die ausreichende Viskosität und Indifferenz bei der Temperatur der Heisspressstufe liefern.

8. Verfahren nach Anspruch 4, worin diese Körper durch gleichförmiges Abschleifen jener Membran getrennt werden.

9. Verfahren nach Anspruch 1, wobei man entweder ein Gemisch aus Siliciumpulver und weiterem Flussmittel oder sonstigen Zusätzen, das dann einer Nitrierbehandlung unterzogen wird, oder ein Gemisch aus Siliciumnitridpulver zusammen mit Flussmittel oder sonstigen Zusätzen, oder beide, zu einer Scheibe formt und ein Rillenmuster in diese Scheibe schneidet, wobei jede Rille bis zu einer allgemein gleichförmigen Tiefe eindringt, so dass entlang der gegenüberliegenden Fläche dieser Scheibe eine Membran aus ungerilltem Material verbleibt.

10. Verfahren nach Anspruch 9, worin die Rillen in einem Gittermuster gebildet werden, wobei jede Rille auf eine Tiefe von 90—95% der Dicke dieser Scheibe eindringt.

11. Verfahren nach Anspruch 9 oder 10, worin diese Körper durch Diamantschleifen der Membran getrennt werden.

12. Verfahren nach Anspruch 1, worin in der Gruppe dieser Körper die nebeneinanderliegenden Körper an einer Stelle in der Mitte ihrer nebeneinanderliegenden Seiten miteinander verbunden sind und diese Körper durch manuelles Brechen der Verbindungen zwischen ihnen getrennt werden.

13. Verfahren nach Anspruch 9, worin besagte Scheibe rund ist und eine Dicke von 0,76—2,03 cm (0,3—0,8 Zoll) und einen Durchmesser von 7,62—30,48 cm (3—12 Zoll) aufweist.

14. Verfahren nach einem der vorhergehenden Ansprüche, worin zehn oder mehr Gruppen in gegenseitiger Berührung gestapelt innerhalb eines Hohlraums zum Heisspressen der Gruppen angeordnet werden.

**Revendications**

1. Procédé pour compacter simultanément et uniformément une pluralité de corps céramiques semi-denses par compression à chaud, caractérisé en ce qu'il comprend les étapes consistant à constituer un groupe desdits corps qui sont reliés l'un à l'autre avec un espace uniforme entre eux, à remplir les espaces entre lesdits corps à l'intérieur dudit groupe avec un agent de compression isostatique, à presser à chaud un ou plusieurs desdits groupes, placés en agencements contigus, avec une pression et une température suffisantes pour compacter chacun desdits corps jusqu'à au moins 96% de sa densité théorique totale, et à séparer lesdits corps en brisant les liaisons entre lesdits corps, laissant ainsi chaque corps dans un état permettant substantiellement son utilisation comme outil de coupe.

2. Procédé suivant la revendication 1, dans lequel lesdits corps sont reliés l'un à l'autre suivant un plan commun de façon à former un groupe plan desdits corps.

3. Procédé suivant la revendication 1, comprenant l'étape consistant à agglomérer un matériau pulvérulent en un disque semi-dense de matériau à base de nitrure de silicium et à rainurer profondément ledit disque dans une face suivant un tracé destiné à définir lesdits corps et à ne laisser entre lesdits corps qu'une quantité de matériau non rainuré juste suffisante pour assurer la liaison desdits corps.

4. Procédé suivant la revendication 3, dans lequel substantiellement tout ledit rainurage est exécuté jusqu'à une profondeur généralement uniforme, le matériau non rainuré définissant ainsi une fine membrane à la face opposée dudit disque.

5. Procédé suivant la revendication 3, dans lequel ledit rainurage est exécuté suivant une grille afin de définir des corps ayant une configuration substantiellement identique.

6. Procédé suivant la revendication 3, dans lequel ledit disque est formé de façon à présenter une densité de 2,7 g/cm³ ou moins et en ce que ladite compression à chaud est exécutée de façon à conférer une densité d'au moins 3,1 g/cm³.

7. Procédé suivant l'une ou l'autre des revendications précédentes, dans lequel ledit agent de compression isostatique est choisi dans le groupe composé du nitrure de bore, du graphite en flocons, du verre de borosilicate, et des métaux ou du verre pulvérulent qui assurent une viscosité suffisante et un caractère suffisamment inerte à la température de l'opération de compression à chaud.

8. Procédé suivant la revendication 4, dans lequel lesdits corps sont séparés en meulant uniformément ladite membrane.

9. Procédé suivant la revendication 1, comprenant les étapes consistant à former en un disque des matériaux composés d'au moins un matériau parmi soit un mélange de poudre de silicium et d'autres additifs fondants ou autres qui est ensuite soumis à un traitement de nitruration soit un mélange de poudre de nitrure de silicium avec des additifs fondants ou autres, et à tailler un réseau de rainures dans ledit disque, chaque rainure pénétrant jusqu'à une profondeur généralement uniforme pour laisser subsister une membrane de matériau non rainuré à la face opposée dudit disque.

10. Procédé suivant la revendication 9, dans lequel les rainures sont tracées suivant une grille, chaque rainure pénétrant jusqu'à une profondeur de 90—95% de l'épaisseur dudit disque.

11. Procédé suivant la revendication 9 ou 10, dans lequel lesdits corps sont séparés en meulant la membrane au moyen d'un diamant.

12. Procédé suivant la revendication 1, dans lequel les corps adjacents, dans le groupe desdits corps, sont reliés à mi-longueur de leurs faces adjacentes et lesdits corps sont séparés en brisant manuellement les liaisons entre lesdits corps.

13. Procédé suivant la revendication 9, dans lequel ledit disque est rond, avec une épaisseur de 0,76—2,03 cm (0,3—0,8 pouce) et un diamètre de 7,62—30,48 cm (3—12 pouces).

14. Procédé suivant l'une ou l'autre des revendications précédentes, dans lequel dix ou davantage de groupes sont placés en agencement contigu à l'intérieur d'une cavité en vue de compacter à chaud les groupes.

FIG. I

FIG. 2

FIG. 3

FIG. 4